# EUROPÄISCHE PATENTSCHRIFT

(11) **EP 1 801 126 B1**
(45) Veröffentlichungstag und Bekanntmachung des Hinweises auf die Patenterteilung: **10.03.2021**
(21) Anmeldenummer: 06025543.7
(22) Anmeldetag: 11.12.2006
(51) Int. Cl.: C08C 19/08, C08C 19/02

(54) **Hydrierter Nitrilkautschuk mit enger Molekulargewichtsverteilung, ein Verfahren zu seiner Herstellung und seine Verwendung**
Hydrogenated nitrile rubber having a narrow molecular weight distribution, a process for its preparation and its use
Caoutchouc nitrile hydrogéné ayant une distribution de poids moléculaire étroite, son procédé de fabrication et son utilisation

(30) Priorität: 21.12.2005 DE 102005061628
(43) Veröffentlichungstag der Anmeldung: 27.06.2007
(73) Patentinhaber: ARLANXEO Deutschland GmbH, 41540 Dormagen (DE)
(72) Erfinder: Reif, Lothar, 41541 Dormagen (DE); Pask, Stephen, 41542 Dormagen (DE)

(56) Entgegenhaltungen:
- EP-A2- 1 760 093
- US-A- 5 258 413
- US-A1- 2003 088 035
- SUSLICK K S; PRICE G J: "APPLICATIONS OF ULTRASOUND TO MATERIALS CHEMISTRY" ANNUAL REVIEW OF MATERIALS SCIENCE, ANNUAL REVIEWS INC., PALO ALTO, CA, US, Bd. 29, 1. Januar 1999 (1999-01-01), Seiten 295-326, XP000986784 ISSN: 0084-6600

## Beschreibung

Die Erfindung betrifft einen hydrierten Nitrilkautschuk mit enger Molekulargewichtsverteilung, ein Verfahren zu dessen Herstellung durch Behandlung eines hydrierten Nitrilkautschuks mit Ultraschall sowie die Verwendung des erhaltenen hydrierten Nitrilkautschuks zur Herstellung von Formteilen.

Hydrierter Nitrilkautschuk, abgekürzt auch als HNBR bezeichnet, wird durch Hydrierung von Nitrilkautschuk, abgekürzt auch als NBR bezeichnet, hergestellt.

Bei Nitrilkautschuken, abgekürzt auch als NBR bezeichnet, handelt es sich um Kautschuke, die Copolymere aus mindestens einem ungesättigten Nitril und mindestens einem konjugierten Dien und möglicherweise weiteren Comonomeren darstellen.

Hydrierter Nitrilkautschuk ist ein Spezialkautschuk, der über eine sehr gute Hitzebeständigkeit, eine hervorragende Beständigkeit gegen Ozon und Chemikalien sowie eine ausgezeichnete Ölbeständigkeit verfügt.

Die vorgenannten physikalischen und chemischen Eigenschaften des HNBR gehen einher mit sehr guten mechanischen Eigenschaften, insbesondere einer hohen Abriebfestigkeit. Aus diesem Grund hat HNBR breite Verwendung in den verschiedensten Anwendungsgebieten gefunden. HNBR wird beispielsweise eingesetzt für Dichtungen, Schläuche und Dämpfungselemente im Automobilsektor, ferner für Statoren, Bohrlochdichtungen und Ventildichtungen im Bereich der Ölförderung sowie auch für zahlreiche Teile der Elektroindustrie, des Maschinen- und Schiffsbaus.

Am Markt kommerziell erhältliche HNBR Typen weisen eine Mooney-Viskosität (ML 1+4 @100 °C) im Bereich von 55 bis 105 auf, was einem Gewichtsmittel des Molekulargewichts M_{w}, (Bestimmungsmethode: Gelpermeationschromatographie (GPC) gegen Polystyrol-Äquivalente) im Bereich von ca. 200.000 bis 500.000 entspricht. Die dabei zu messenden Polydispersitätsindizes D (D = M_{w}/Mₙ, wobei M_{w} das Gewichtsmittel und Mₙ das Zahlenmittel des Molekulargewichts darstellt), die eine Aussage über die Breite der Molekulargewichtsverteilung liefern, sind größer als 3,0. Der Restdoppelbindungsgehalt liegt ferner im Bereich von 1 bis 18 % (bestimmt durch IR-Spektroskopie).

Der Verarbeitbarkeit von HNBR sind durch die relativ hohe Mooney-Viskosität starke Beschränkungen auferlegt. Für viele Anwendungen ist ein HNBR Typ wünschenswert, der ein niedrigeres Molekulargewicht und damit eine niedrigere Mooney-Viskosität besitzt. Dies würde die Verarbeitbarkeit entscheidend verbessern.

In der Vergangenheit wurden zahlreiche Versuche unternommen, die Kettenlänge von HNBR durch Abbau zu verkürzen. Eine Möglichkeit ist der mechanische Abbau durch sogenannte Mastikation, z. B. auf einem Walzwerk. Eine weitere Möglichkeit ist der chemische Abbau, z.B. durch Umsetzung mit starken Säuren. Dieser chemische Abbau hat jedoch den Nachteil, dass funktionelle Gruppen wie Carbonsäure- und Ester-Gruppen in das Molekül eingebaut werden und zusätzlich die Mikrostrukur des Polymers substanziell geändert wird. All diese Änderungen bringen Nachteile für die Anwendungen mit sich.

Ein HNBR mit einer Mooney-Viskosität (ML 1+4 @100 °C) kleiner als 55, welches somit eine verbesserte Verarbeitbarkeit besitzt, ist mit den Methoden, die die Standardproduktion derzeit dominieren, nicht oder nur schwer herstellbar. Das gängige Herstellverfahren für HNBR ist die Hydrierung von NBR. Durch diese Hydrierung erhöht sich die Mooney-Viskosität des Polymers normalerweise um den Faktor 2 oder mehr, abhängig unter anderem vom eingesetzten NBR-Typ und dem Hydriergrad. Dadurch ist der Viskositätsbereich des am Markt erhältlichen HNBR limitiert durch die Untergrenze der Mooney-Viskosität des Ausgangsmaterials NBR, die heutzutage bei Werten von etwas unter 30 MU liegt.

In der WO-A-02/100905 wird ein Verfahren beschrieben, welches den Abbau von Nitrilkautschuk-Ausgangspolymeren durch Olefinmetathese und eine anschließende Hydrierung umfasst. Hierbei wird ein Nitrilkautschuk in einem ersten Schritt in Gegenwart eines Co-Olefins und eines speziellen Komplexkatalysators auf Osmium-, Ruthenium-, Molydän- oder Wolfram-Basis umgesetzt und in einem zweiten Schritt hydriert. Erhältlich sind gemäß WO-A-02/100941 über dieses Verfahren hydrierte Nitrilkautschuke mit einem Gewichtsmittel des Molekulargewichts (M_{w}) im Bereich von 30.000 bis 250.000, einer Mooney-Viskosität (ML 1+4 @100 °C) im Bereich von 3 bis 50 und einem Polydispersitätsindex D von kleiner 2,5. Die erhaltenen HNBR-Abbauprodukte zeichnen sich somit durch einen breiten Bereich an möglichen Molekulargewichten aus sowie durch eine im Verhältnis zum Ausgangspolymeren engere Molekulargewichtsverteilung. Nachteilig ist an dieser Metathese-Reaktion jedoch, dass ein aufwändig herzustellender und teurer Katalysator eingesetzt werden muß. Ein weiterer Nachteil besteht darin, dass die Breite der Molekulargewichtsverteilung bzw. der Polydispersitätsindex nach unten durch die Natur des chemischen Abbaus des Molekulargewichts begrenzt ist. Bei der Olefinmetathese erfolgt ein statistischer Kettenabbau, der zu einer Polydispersität von minimal 2,0 führt. So wird in "The Polymeric Materials Encyclopedia", CRC Press, Inc. 1996, V. V. Korshak, "Metathesis polymerization, Cycloolefins", Seite 12 beschrieben, dass durch einen Metathese-Abbau ungesättigter Kohlenstoff-Polymerketten ein Polydispersitätsindex von 2,01-2,23 erzielt wird. Kleinere Werte als 2, 01 können somit nur durch den Meßfehler der Untersuchungsmethode verfälschte Werte darstellen.

US 2003/088035 A1 beschreibt einen hydrierten Nitrilkautschuk mit einem Molekulargewicht (MW) in einem Bereich von 30,000 bis 250,000, eine Mooney-Viskosität (ML 1+4@100°C) in einem Bereich von 3 bis 50 und einen MWD (oder Polydispersitätsindex) von weniger als 2.5. Weiterhin offenbart dieses Dokument ein Verfahren zum Herstellen eines solchen Nitrilkautschuks.

US 5,258,413 A bezieht sich auf ein kontinuierliches Ultraschallverfahren zum Brechen der Kohlenstoff-Schwefel- (C-S), Schwefel-Schwefel- (S-S) und, falls gewünscht, Kohlenstoff-Kohlenstoff- (C-C) Bindungen in einem vulkanisierten Elastomer. Durch die Anwendung bestimmter Ultraschallamplituden in Gegenwart von Druck und gegebenenfalls Wärme kann das dreidimensionale Netzwerk aus vulkanisiertem Elastomer aufgebrochen werden. Als wünschenswerteste Konsequenz wird der mit Ultraschall behandelte vulkanisierte Gummi weich, so dass dieses Material wiederaufbereitet und geformt werden kann, ähnlich wie bei unvulkanisierten Elastomeren.

SUSLICK K S; PRICE G J: "APPLICATIONS OF ULTRASOUND TO MATERIALS CHEMISTRY" ANNUAL REVIEW OF MATERIALS SCIENCE, ANNUAL REVIEWS INC., PALO ALTO, CA, US, Bd. 29, 1. Januar 1999 (1999-01-01), Seiten 295-326, XP000986784 ISSN: 0084-6600 beschreibt grundsätzlich und hinsichtlich der Parameter, wie insbesondere der Temperatur unspezifiziert, dass Polymere durch Ultraschall sowohl aufgebaut, als auch abgebaut werden können.

EP 1 760 093 A2 beschreibt Ruthenium- oder Osmium-basierte Katalysatoren, die gleichzeitig einen gegebenenfalls substituierten Imidazolidin-Liganden sowie einen Carben-Liganden, der einen Phosphin-Rest trägt, aufweisen, ein Verfahren zu deren Herstellung sowie deren Verwendung zum Metathese-Abbau von Nitrilkautschuk.

Ausgehend vom Stand der Technik bestand die Aufgabe der vorliegenden Erfindung darin, ein Verfahren bereitzustellen, mit dem ein hydrierter Nitrilkautschuk hergestellt werden kann, der eine engere Molekulargewichtsverteilung, respektive einen kleineren Polydispersitätsindex als die bisher bekannten hydrierten Nitrilkautschuke des vorzitierten Stands der Technik besitzt und gleichzeitig auch niedrige Werte für das Gewichtsmittel des Molekulargewichts aufweist.

Überraschenderweise wurde gefunden, dass sich das Molekulargewicht von hydrierten Nitrilkautschuken vorteilhafterweise durch die Einwirkung von Ultraschall in der Lösung bei einer Temperatur im Bereich von -20 bis 50°C abbauen lässt und auf diesem Weg hydrierte Nitrilkautschuke verringerten Molekulargewichts verfügbar werden, die eine deutlich engere Molekulargewichtsverteilung und somit einen kleineren Polydispersitätsindex aufweisen als die nach dem kombinierten Metathese-/Hydrierungsverfahren hergestellten niedermolekularen hydrierten Nitrilkautschuke des vorzitierten Stands der Technik.

Gegenstand der vorliegenden Erfindung ist somit ein Verfahren zur Herstellung eines hydrierten Nitrilkautschuks (B), dadurch gekennzeichnet, dass man eine Lösung eines hydrierten Nitrilkautschuks (A) in einem Lösungsmittel der Einwirkung von Ultraschall aussetzt, wobei der erhaltene hydrierte Nitrilkautschuk (B) ein niedrigeres Gewichtsmittel des Molekulargewichts (M_{w}) besitzt und einen Polydispersitätsindex D = M_{w}/Mₙ aufweist, der kleiner oder gleich 2 ist, wobei das Verfahren bei einer Temperatur im Bereich von -20 bis 50°C durchgeführt wird und wobei das Gewichtsmittel des Molekulargewichts M_{w} und der Polydispersitätindex D ermittelbar sind mittels Gelpermeationschromatographie.

Unter **hydrierten Nitrilkautschuken** (HNBR) werden im Rahmen dieser Anmeldung Co- oder Terpolymere verstanden, welche Wiederholungseinheiten mindestens eines konjugierten Diens, mindestens eines α,β-ungesättigten Nitrils und gegebenenfalls einer oder mehrerer weiterer copolymerisierbarer Monomere enthalten und bei denen die C=C Doppelbindungen der einpolymerisierten Dieneinheiten ganz oder teilweise hydriert sind. Der Hydriergrad der einpolymerisierten Dieneinheiten liegt üblicherweise in einem Bereich von 50 bis 100%, bevorzugt in einem Bereich von 85 bis 100% und besonders bevorzugt in einem Bereich von 95 bis 100%. Das **konjugierte Dien** kann von jeder Natur sein. Bevorzugt werden C₄-C₆-konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als **α,β-ungesättigtes Nitril** kann jedes bekannte α,β-ungesättigte Nitril eingesetzt werden, bevorzugt sind C₃-C₅-α,β-ungesättigte Nitrile wie Acrylnitril, Methacrylnitril, Ethacrylnitril oder Mischungen davon. Besonders bevorzugt ist Acrylnitril.

Einen besonders bevorzugten hydrierten Nitrilkautschuk stellt ein hydriertes Copolymer auf Basis der Monomere Acrylnitril und 1,3-Butadien dar.

Neben dem konjugierten Dien und dem α,β-ungesättigten Nitril können noch ein oder mehrere weitere dem Fachmann bekannte Monomere eingesetzt werden, z.B. α,β-ungesättigte Mono- oder Dicarbonsäuren, deren Ester oder Amide. Als α,β-ungesättigte Mono- oder Dicarbonsäuren sind dabei Fumarsäure, Maleinsäure, Acrylsäure und Methacrylsäure bevorzugt. Als Ester der α,β-ungesättigten Carbonsäuren werden vorzugsweise deren Alkylester und Alkoxyalkylester eingesetzt. Besonders bevorzugte Ester der α,β-ungesättigten Carbonsäuren sind Methylacrylat, Ethylacrylat, Butylacrylat, Butylmethacrylat, 2-Ethylhexylacrylat, 2-Ethylhexylmethacrylat und Octylacrylat.

Die Anteile an konjugiertem Dien und α,β-ungesättigtem Nitril in den einzusetzenden HNBR-Polymeren können in weiten Bereichen schwanken. Der Anteil des oder der Summe der konjugierten Diene liegt üblicherweise im Bereich von 40 bis 90 Gew.% und bevorzugt im Bereich von 55 bis 75 Gew. %, bezogen auf das Gesamtpolymer. Der Anteil des oder der Summe der α,β-ungesättigten Nitrile liegt üblicherweise bei 10 bis 60 Gew.-%, bevorzugt bei 25 bis 45 Gew.-%, bezogen auf das Gesamtpolymer. Die Anteile der Monomere summieren sich jeweils zu 100 Gew.% auf. Die zusätzlichen Monomere können in Mengen von 0,1 bis 40 Gew.%, bevorzugt 1 bis 30 Gew.-%, bezogen auf das Gesamtpolymer, vorliegen. In diesem Fall werden entsprechende Anteile des oder der konjugierten Diene bzw. des oder der α,β-ungesättigten Nitrile durch die Anteile der zusätzlichen Monomere ersetzt, wobei sich die Anteile aller Monomere jeweils zu 100 Gew.% aufsummieren.

Die Herstellung der Nitrilkautschuke durch Polymerisation der vorgenannten Monomere ist dem Fachmann hinlänglich bekannt und in der Literatur (z.B. Houben-Weyl, Methoden der Organischen Chemie Bd.14/1, Georg Thieme Verlag Stuttgart 1961) umfangreich beschrieben.

Die Hydrierung der vorstehend beschriebenen Nitrilkautschuke zu hydriertem Nitrilkautschuk (A) kann in der dem Fachmann bekannten Art und Weise erfolgen. Geeignet ist beispielsweise die Umsetzung mit Wasserstoff unter Einsatz homogener Katalysatoren, wie z.B. dem als "Wilkinson"-Katalysator ((PPh₃)₃RhCl) bekannten oder anderen. Verfahren zur Hydrierung von Nitrilkautschuk sind bekannt. Rhodium oder Titan werden üblicherweise als Katalysatoren verwendet, wobei aber auch Platin, Iridium, Palladium, Rhenium, Ruthenium, Osmium, Kobalt oder Kupfer entweder als Metall, oder aber bevorzugt in Form von Metallverbindungen eingesetzt werden können (siehe z.B.US-A-3,700,637, DE-PS-2 539 132, EP-A- 134 023, DE-OS- 35 41 689, DE-OS- 35 40 918, EP-A-298 386, DE-OS- 35 29 252, DE-OS- 34 33 392, US-A-4,464,515 und US-A-4,503,196).

Geeignete Katalysatoren und Lösungsmittel für eine Hydrierung in homogener Phase werden im folgenden beschrieben und sind auch aus DE-A-25 39 132 und der EP-A-0 471 250 bekannt

Die selektive Hydrierung kann beispielsweise in Gegenwart eines Rhodium-haltigen Katalysators erreicht werden. Einsetzbar ist beispielsweise ein Katalysator der allgemeinen Formel

(R¹ₘB)₁RhXₙ

worin
- R¹: gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen,
- B: Phosphor, Arsen, Schwefel oder eine Sulfoxid-Gruppe S=O bedeutet,
- X: Wasserstoff oder ein Anion, vorzugsweise Halogen und besonders bevorzugt Chlor oder Brom, bedeutet,
- l: 2,3 oder 4 ist,
- m: 2 oder 3 ist und
- n: 1,2 oder 3, bevorzugt 1 oder 3 ist.

Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis-(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel R¹ₘB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl-, Tricycloalkyl-, Triaryl-, Triaralkyl-, Diarylmonoalkyl-, Diarylmonocycloalkyl-, Dialkylmonoaryl-, Dialkylmonocycloalkyl-, Dicycloalkylmonoaryl- oder Dicyclalkylmonoaryl-Resten.

Geeignete Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.%, bezogen auf das Gewicht des zu hydrierenden Nitrilkautschuks, eingesetzt. Bevorzugt ist ferner das Gewichtsverhältnis des Rhodium-haltigen Katalysators zum Co-Katalysator im Bereich von 1:3 bis 1:55, bevorzugt im Bereich von 1:5 bis 1:45. Geeigneterweise werden 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Unter Hydrierung wird im Rahmen dieser Erfindung eine Umsetzung der im Ausgangs-Nitrilkautschuk vorhandenen C=C Doppelbindungen verstanden, die üblicherweise zu mindestens 50 %, bevorzugt zu mindestens 75 %, besonders bevorzugt zu mindestens 85 % erfolgt, bezogen auf die im Ausgangs-Nitrilkautschuk vorhandenen Doppelbindungen.

Die hydrierten Nitrilkautschuke (A), die im erfindungsgemäßen Verfahren als Ausgangsmaterial eingesetzt werden, besitzen üblicherweise ein Gewichtsmittel des Molekulargewicht M_{w} im Bereich von 200.000 bis 1.000.000, bevorzugt im Bereich von 200.000 bis 400.000 und insbesondere bevorzugt im Bereich von 200.000 bis 300.000. Sie besitzen ferner einen Polydispersitätsindex D= M_{w}/Mₙ, wobei M_{w} das Gewichtsmittel und Mₙ das Zahlenmittel des Molekulargewichts darstellt, im Bereich von 1,9 bis 6,0 , bevorzugt im Bereich von 2,2 bis 5,0 und insbesondere im Bereich von 2,5 bis 4,0.

Die Mooney-Viskosität der im erfindungsgemäßen Verfahren eingesetzten hydrierten Nitrilkautschuke (A) (ML 1+4 @100 °C) liegt im Bereich von 50 bis 130 , bevorzugt von 55 bis 75. Die Bestimmung der Mooney-Viskosität erfolgt dabei gemäß ASTM Norm D 1646.

Unter der erfindungsgemäßen Einwirkung von Ultraschall wird der Eintrag von Schallenergie mit einer Frequenz von mindestens 18 kHz, bevorzugt im Bereich von 18 bis 30 kHz und insbesondere im Bereich von 19 bis 25 kHz verstanden.

Dabei ist der Eintrag der Energie abhängig von der eingestrahlten Frequenz. Der Energieeintrag ist um so niedriger, je höher die Frequenz ist. Von "Ultraschall hoher Energie" spricht man bei Frequenzen bis 100 kHz. Ganz besonders bevorzugt ist hier die Verwendung von Ultraschall mit einer Frequenz im Bereich um 20 kHz.

Der Eintrag der Energie erfolgt durch Eintauchen einer Sonotrode in eine Lösung des zu behandelnden hydrierten Nitrilkautschuks (A) in einem Lösungsmittel.

Das erfindungsgemäße Verfahren kann sowohl diskontinuierlich als auch kontinuierlich durchgeführt werden.

Bei diskontinuierlicher Durchführung, d.h. einer "batch"-Fahrweise, wird in einem gerührten oder einem ungerührten Reaktor gearbeitet.

Ebenso möglich ist die Durchführung des Energieeintrags bei kontinuierlicher Fahrweise. Hierbei kann beispielsweise ein durchströmter Reaktor im "CSTR"-Modus (continuous stirred tank reactor) verwendet werden, der einmalig oder mehrmals in "Kreis"-Fahrweise betrieben wird. Mehrere hintereinander in Serie geschaltete CSTRs können ebenfalls zur Durchführung des erfindungsgemäßen Verfahrens eingesetzt werden. Gleichermaßen geeignet ist ein kontinuierlich durchströmter Rohrreaktor bei Einsatz einer entsprechenden Anzahl von Sonotroden.

Die Einwirkung des Ultraschalls auf die hydrierten Nitrilkautschuke (A) erfolgt in Lösung. Hierbei werden die Molekülketten durch Aufbringen mechanischer Kräfte gespalten (siehe auch "Applied Sonochemistry", Herausgeber: T.J.Mason, J.P.Lorimer, Wiley-VCH Verlag, Weinheim, 2002, Seite 161-162). Die hohen Scherkräfte, die für die Molekülketten zur Spaltung führen, entstehen durch "Kavitation". Dies bezeichnet das Entstehen und das schlagartige Kollabieren von Gasblasen in einer Flüssigkeit.

Als Lösungsmittel kann jedes für HNBR geeignete Lösungsmittel dienen, wie beispielsweise Dichlormethan, Benzol, Toluol, Cyclohexan oder Monochlorbenzol. Bevorzugt ist Monochlorbenzol.

Die Konzentration des hydrierten Nitrilkautschuks (A) im Lösungsmittel ist nur durch die sich einstellende Viskosität der Lösung limitiert. Es ist jedoch festzustellen, daß der Molekulargewichtsabbau um so effektiver fortschreitet, je niedriger die Konzentration bei ansonsten gleichen Bedingungen ist. Üblicherweise wird mit einer anfänglichen Konzentration des hydrierten Nitrilkautschuks (A) von 0,5 - 15, bevorzugt 1,0 - 7,5 Gew.% im Lösungsmittel gearbeitet.

Der Eintrag der Ultraschallenergie ist in einem weiten Temperatur und Druckbereich möglich. Es hat sich gezeigt, dass tiefe Temperaturen einen positiven Einfluss auf die Kettenabbaureaktion haben. Daher wird das erfindungsgemäße Verfahren bei Temperaturen im Bereich von -20 bis 50°C durchgeführt.

Üblicherweise wird das erfindungsgemäße Verfahren in einem Druckbereich von 1 bis 5 bar durchgeführt.

Selbstverständlich können im erfindungsgemäßen Verfahren auch Mischungen verschiedener hydrierter Nitrilkautschuke (A) eingesetzt und der Ultraschallbehandlung ausgesetzt werden. Entsprechend wird dann auch eine Mischung hydrierter Nitrilkautschuke (B) erhalten.

Die im erfindungsgemäßen Verfahren erhaltenen hydrierten Nitrilkautschuke (B) zeichnen sich durch eine besonders enge Molekulargewichtsverteilung und einen entsprechend niedrigen Wert für den Polydispersitätsindex aus. Hydrierte Nitrilkautschuke dieses Eigenschaftsprofils waren bisher unbekannt und nicht zugänglich.

Beschrieben werden ferner hydrierte Nitrilkautschuke, die einen Polydispersitätsindex D = M_{w}/Mₙ aufweisen, der kleiner oder gleich 2, bevorzugt kleiner 2, besonders bevorzugt kleiner als 1,9 und ganz besonders bevorzugt kleiner als 1, 7 ist. Insbesondere ist D größer als 1 und kleiner als 2,0, insbesondere bevorzugt ist D größer als 1 und kleiner als 1,9.

Die im erfindungsgemäßen Verfahren erhaltenen hydrierten Nitrilkautschuke (B) besitzen ein niedrigeres Gewichtsmittel des Molekulargewicht M_{w} als die eingesetzten hydrierten Nitrilkautschuke (A). Das Gewichtsmittel des Molekulargewichts M_{w} der hydrierten Nitrilkautschuke (B) liegt üblicherweise im Bereich von 30.000-250.000, bevorzugt im Bereich von 30.000 bis 150.000 und insbesondere bevorzugt im Bereich von 30 000 - 100 000.

Die Mooney-Viskosität der im erfindungsgemäßen Verfahren erhaltenen hydrierten Nitrilkautschuke (B) (ML 1+4 @100 °C) liegt im Bereich von 1 - 50, bevorzugt im Bereich von 10 - 40. Die Bestimmung der Mooney-Viskosität erfolgt dabei gemäß ASTM Norm D 1646.

Überraschenderweise gelingt somit auf diesem Weg der Ultraschallbehandlung erstmals die Bereitstellung von hydrierten Nitrilkautschuken, die eine extrem enge Molekulargewichtsverteilung aufweisen. Offensichtlich scheint die Spaltung der chemischen Bindungen am eingesetzten hydrierten Nitrilkautschuk durch den mechanischen Spaltungsprozeß im Gegensatz zu einer chemischen Bindungsspaltung nicht statistisch zu erfolgen, d.h. nicht alle Bindungen der Polymerkette sind gleich "reaktiv".

Die hydrierten Nitrilkautschuke niedrigen Molekulargewichts und enger Molekulargewichtsverteilung sind sehr gut verarbeitbar.

Beschrieben wird auch die Verwendung der hydrierten Nitrilkautschuke zur Herstellung von Formkörpern, bevorzugt von solchen, die durch Extrusion oder Spritzguss hergestellt werden.

Beschrieben sind ferner Formteile, die aus den hydrierten Nitrilkautschuken sehr enger Molekulargewichtsverteilung bzw. entsprechend niedrigem Polydispersitätsindex hergestellt werden. Die hierfür beispielsweise einsetzbaren Methoden wie Spritzguss- oder Extrusionsverfahren sowie die entsprechende Spritzgiessvorrichtungen oder Extruder sind dem Fachmann hinlänglich bekannt. Bei der Herstellung dieser Formteile können den hydrierten Nitrilkautschuke noch die gängigen, dem Fachmann bekannten und von ihm mit üblichem Fachwissen geeignet auszuwählenden Hilfsmittel wie z.B. Füllstoffe, Füllstoffaktivatoren, Beschleuniger, Vernetzer, Ozonschutzmittel, Antioxidationsmittel, Verarbeitungsöle, Extenderöle, Weichmacher, Aktivatoren oder Anvulkanisationshemmer zugesetzt werden.

Bevorzugt werden aus den hydrierten Nitrilkautschuken beispielsweise Dichtungen, Schläuche, Dämpfungselemente, Statoren oder Kabelmäntel hergestellt.

### Beispiele

Die Bestimmung des Fortschritts der Kettenabbaureaktion erfolgt durch Gelpermeationschromatographie (GPC). Verwendet wurde ein modulares System mit Shodex RI-71 Differentialrefraktometer, Autosampler S 5200 (Firma SFD), Säulenofen (ERC-125), Pumpe Shimadzu LC 10 AT und einer Säulenkombination aus 3 "mixed-B" Säulen von Polymer Labs. Als Lösungsmittel diente Tetrahydrofuran, die erhaltenen Molekulargewichte beziehen sich auf Polystyrol-Standards der Fa. PSS (Mainz). Eine separate Eichung für HNBR wurde nicht durchgeführt.

Die Bestimmung der molekularen Parameter wie Zahlenmittel des Molekulargewichts (Mₙ), Massenmittel des Molekulargewichts (M_{w}) und dem daraus resultierenden Polydispersitätindex D erfolgt aus dem RI-Signal mittels der Software " Millennium" der Fa. Waters.

### Beispiel 1 (batch-Fahrweise)

160 g einer Lösung von 1 Gew.% HNBR (Therban® 3446 (Lanxess Deutschland GmbH), Mooney-Viskosität (ML 1+4 @100°C) von 60 MU (bestimmt gemäß ASTM Norm D 1646), Acrylnitril-Gehalt 34 Gew.%, Restdoppelbindungsgehalt (bestimmt durch IR-Spektroskopie) von 4%) in Monochlorbenzol wurden in einem Edelstahlreaktor mit Thermostatisierung bei 30°C über einen Zeitraum von 3 h mit Ultraschall beschallt.

Als Quelle für die Schallenergie diente ein Gerät vom Typ UIP 1000 der Firma Dr. Hielscher, (Maximalleistung 1000 W, Frequenz 20 kHz, Sonotrode BS34 mit Durchmesser 34mm aus Titan, variable Amplitude). Als Amplitude wurden 50% der Maximalleistung gewählt.

Die in regelmäßigen Abständen genommenen Proben wurden mittels GPC charakterisiert hinsichtlich der molekularen Parameter. Die Ergebnisse sind in Tabelle 1 dargestellt.

**Tabelle 1:**

| **Beschallungszeit (h)** | **Zahlenmittel Mₙ** | **Massenmittel M_{w}** | **Polydispersität D** |
|---|---|---|---|
| 0 (=Ausgangswert) | 81.000 | 264.000 | 3,2 |
| 1 | 68.000 | 126.000 | 1,9 |
| 2 | 61.000 | 104.000 | 1,7 |
| 3 | 56.000 | 91.000 | 1,6 |

### Beispiel 2 (batch-Fahrweise)

Bei gleichen Einsatzstoffen und Bedingungen wie in Beispiel 1 wurde mittels eines Kryostaten die Temperatur auf 0°C abgesenkt. Die Ergebnisse sind in Tabelle 2 dargestellt.

**Tabelle 2:**

| **Beschallungszeit (h)** | **Zahlenmittel Mₙ** | **Massenmittel M_{w}** | **Polydispersität D** |
|---|---|---|---|
| 0 (=Ausgangswert) | 81.000 | 264.000 | 3,2 |
| 1 | 67.000 | 116.000 | 1,7 |
| 2 | 59.000 | 93.000 | 1,6 |
| 3 | 55.000 | 81.000 | 1,5 |

### Beispiele 3-5 (batch-Fahrweise)

Die gleichen apparativen Einstellungen wie in Beispiel 1 wurden bei einer Beschallungstemperatur von 40°C auf eine Lösung von 1 Gew.% (Beispiel 3), 3 Gew.% (Beispiel 4) und 5 Gew.% (Beispiel 5) des Therban®3446 angewandt. Die Ergebnisse sind in den nachfolgenden Tabellen 3-5 dargestellt.

**Tabelle 3: Konzentration des Therban®3446: 1 Gew.%**

| **Beschallungszeit (h)** | **Zahlenmittel Mₙ** | **Massenmittel M_{w}** | **Polydispersität D** |
|---|---|---|---|
| 0 (=Ausgangswert) | 81.000 | 264.000 | 3,2 |
| 1 | 70.500 | 137.000 | 1,9 |
| 2 | 65.700 | 113.500 | 1,7 |
| 3 | 64.400 | 101.000 | 1,6 |

**Tabelle 4: Konzentration des Therban®3446: 3 Gew.%**

| **Beschallungszeit (h)** | **Zahlenmittel Mₙ** | **Massenmittel M_{w}** | **Polydispersität D** |
|---|---|---|---|
| 0 (=Ausgangswert) | 81.000 | 264.000 | 3,2 |
| 1 | 80.000 | 162.000 | 2,0 |
| 2 | 76.000 | 140.000 | 1,8 |
| 3 | 74.000 | 125.000 | 1,7 |

**Tabelle 5: Konzentration des Therban®3446: 5 Gew.%**

| **Beschallungszeit (h)** | **Zahlenmittel Mₙ** | **Massenmittel M_{w}** | **Polydispersität D** |
|---|---|---|---|
| 0 (=Ausgangswert) | 81.000 | 264.000 | 3,2 |
| 1 | 79.000 | 182.000 | 2,3 |
| 2 | 81.000 | 166.000 | 2,1 |
| 3 | 76.000 | 151.000 | 2,0 |

### Beispiel 6 (Kreisfahrweise)

Bei den gleichen apparativen Einstellungen wie in Beispiel 1 wurde bei einer Beschallungstemperatur von 30°C eine Lösung von 1 Gew.% Therban®3446 aus einem Vorratsgefäß durch einen Durchflußreaktor gepumpt und wieder in das Vorratsgefäß zurückgeführt. Dabei war das Volumen des Vorratsgefäßes das Vierfache des Volumens des Reaktionsraums. Die Umpumpgeschwindigkeit wurde so gewählt, daß sich eine einfache mittlere Verweilzeit von 0,25 h im Reaktionsraum einstellte. In regelmäßigen zeitlichen Abständen wurden dem Vorratsgefäß Proben entnommen und der Fortschritt der Abbaureaktion mittels GPC überprüft. Die Ergebnisse sind in Tabelle 6 dargestellt.

**Tabelle 6:**

| **Beschallungszeit (h)** | **Zahlenmittel Mₙ** | **Massenmittel M_{w}** | **Polydispersität D** |
|---|---|---|---|
| 0 (=Ausgangswert) | 81.000 | 264.000 | 3,2 |
| 0,5 | 77.000 | 177.000 | 2,3 |
| 1 | 70.000 | 158.000 | 2,2 |
| 2 | 76.000 | 147.000 | 1,9 |
| 3 | 71.000 | 134.000 | 1,9 |
| 4 | 72.000 | 125.000 | 1,7 |
| 5 | 68.000 | 119.000 | 1,7 |
| 6 | 66.000 | 112.000 | 1,7 |

### Beispiel 7 (Kreisfahrweise)

Bei den gleichen apparativen Einstellungen und der gleichen Konfiguration wie in Beispiel 6 wurde eine Lösung von 5 Gew.% Polymer im Kreis durch einen Durchflußreaktor geführt. Die Amplitudeneinstellung der Ultraschallquelle wurde auf die Maximalleistung eingestellt. Die Umpumpgeschwindigkeit wurde so gewählt, daß sich eine einfache mittlere Verweilzeit von 1 min im Reaktionsraum einstellte. In regelmäßigen zeitlichen Abständen wurden dem Vorratsgefäß Proben entnommen und der Fortschritt der Abbaureaktion mittels GPC überprüft. Die Ergebnisse sind in Tabelle 7 dargestellt.

**Tabelle 7:**

| **Beschallungszeit (h)** | **Zahlenmittel Mₙ** | **Massenmittel M_{w}** | **Polydispersität D** |
|---|---|---|---|
| 0 (=Ausgangswert) | 81.000 | 264.000 | 3,2 |
| 0,75 | 81.000 | 194.000 | 2,4 |
| 2 | 79.000 | 182.000 | 2,3 |
| 3 | 74.000 | 169.000 | 2,3 |
| 4 | 82.000 | 164.000 | 2,0 |
| 5 | 72.000 | 155.000 | 2,2 |
| 6 | 79.000 | 152.000 | 1,9 |
| 7 | 76.000 | 146.000 | 1,9 |

### Beispiel 8 (1-Kessel kontinuierliche Fahrweise)

Bei den gleichen apparativen Einstellungen wie in Beispiel 1 wurden bei einer Beschalltemperatur von 30°C eine Lösung von 1 Gew.% Therban®3446 aus einem Vorratsgefäß durch einen Durchflußreaktor gepumpt und dann separat gesammelt. Ein solcher Aufbau entspricht einer 1 Kessel Konti-Anlage. Die Pumpgeschwindigkeit wurde so gewählt, daß sich eine einfache mittlere Verweilzeit von 15 min im Reaktionsraum einstellte. Das Ergebnis ist in Tabelle 8 dargestellt

**Tabelle 8:**

| **Beschallungszeit (h)** | **Zahlenmittel Mₙ** | **Massenmittel M_{w}** | **Polydispersität D** |
|---|---|---|---|
| 0 (=Ausgangswert) | 81000 | 264000 | 3,2 |
| 0,25 | 79000 | 201000 | 2,5 |

### Beispiel 9 (Simulation einer kontinuierlichen Fahrweise mit 6-Kesseln in Serie)

Bei den gleichen apparativen Einstellungen wie in Beispiel I wurden bei einer Beschalltemperatur von 30°C eine Lösung von 1 Gew.% Therban®3446 aus einem Vorratsgefäß durch einen Durchflußreaktor gepumpt und dann separat gesammelt. Die erhaltene Lösung wurde erneut durch den Reaktor geführt und vereinheitlicht. Dieser Vorgang wurde insgesamt sechsmal durchgeführt. Eine solche Vorgehensweise stellt eine Simulation einer 6-Kessel kontinuierlichen Anlage dar und liefert das gleiche Verweilzeitspektrum der einzelnen Volumenelemente. Die Pumpgeschwindigkeit wurde so gewählt, daß sich eine einfache mittlere Verweilzeit von 15 min im Reaktionsraum einstellte. Nach jedem Durchlauf wurde eine Probe entnommen und mittels GPC charakterisiert. Die Ergebnisse sind in Tabelle 9 dargestellt.

**Tabelle 9:**

| **Anzahl der Zyklen** | **Zahlenmittel Mₙ** | **Massenmittel M_{w}** | **Polydispersität D** |
|---|---|---|---|
| 0 (=Ausgangswert) | 81.000 | 264.000 | 3,2 |
| 1 | 79.000 | 201.000 | 2,5 |
| 2 | 77.000 | 173.000 | 2,2 |
| 3 | 79.000 | 159.000 | 2,0 |
| 4 | 77.000 | 150.000 | 2,0 |
| 5 | 75.000 | 142.000 | 1,9 |
| 6 | 73.000 | 137.000 | 1,9 |

## Patentansprüche

1. Verfahren zur Herstellung eines hydrierten Nitrilkautschuks (B), **dadurch gekennzeichnet, dass** man eine Lösung eines hydrierten Nitrilkautschuks (A) in einem Lösungsmittel der Einwirkung von Ultraschall aussetzt, wobei der erhaltene hydrierte Nitrilkautschuk (B) ein niedrigeres Gewichtsmittel des Molekulargewichts (M_{w}) besitzt als der hydrierte Nitrilkautschuk (A) und einen Polydispersitätsindex D = M_{w}/Mₙ aufweist, der kleiner oder gleich 2 ist, wobei das Verfahren bei einer Temperatur im Bereich von -20 bis 50°C durchgeführt wird und wobei das Gewichtsmittel des Molekulargewichts M_{w} und der Polydispersitätindex D ermittelbar sind mittels Gelpermeationschromatographie.

2. Verfahren gemäß Anspruch 1, wobei man als hydrierten Nitrilkautschuk (A) ein hydriertes Co- oder Terpolymer einsetzt, welches Wiederholungseinheiten mindestens eines konjugierten Diens, mindestens eines α,β-ungesättigten Nitrils und gegebenenfalls einer oder mehrerer copolymerisierbarer Monomere enthält.

3. Verfahren gemäß Anspruch 1 oder 2, wobei die hydrierten Nitrilkautschuke (A) ein Gewichtsmittel des Molekulargewichts M_{w} im Bereich von 200.000 bis 1.000.000, bevorzugt im Bereich von 200.000 bis 400.000, insbesondere bevorzugt im Bereich von 200.000 bis 300.000 sowie eine Polydispersität D= Mw/Mn im Bereich von 1,9 bis 6, bevorzugt im Bereich von 2,2 bis 5 und insbesondere im Bereich von 2,5 bis 4 besitzen.

4. Verfahren gemäß einem oder mehreren der Ansprüche 1 bis 3, wobei Ultraschall einer Frequenz von mindestens 18 kHz, bevorzugt im Bereich von 18 bis 30 kHz und insbesondere im Bereich von 19 und 25 kHz eingesetzt wird.

5. Verfahren gemäß einem oder mehreren der Ansprüche 1 bis 4, wobei der Energieeintrag durch den Ultraschall durch Eintauchen einer Sonotrode in der Lösung des hydrierten Nitrilkautschuks (A) in einem Lösungsmittel erfolgt.

6. Verfahren gemäß einem oder mehreren der Ansprüche 1 bis 5, wobei als Lösungsmittel für den hydrierten Nitrilkautschuk (A) Dichlormethan, Benzol, Toluol, Cyclohexan oder Monochlorbenzol verwendet wird.

7. Verfahren gemäß einem oder mehreren der Ansprüche 1 bis 6, wobei die Durchführung diskontinuierlich oder kontinuierlich erfolgt.

## Claims

1. Process for producing a hydrogenated nitrile rubber (B), **characterized in that** a solution of a hydrogenated nitrile rubber (A) in a solvent is subjected to the action of ultrasound, wherein the obtained hydrogenated nitrile rubber (B) has a lower weight-average molecular weight (M_{w}) than the hydrogenated nitrile rubber (A) and has a polydispersity index D = M_{w}/Mₙ of 2 or less, wherein the process is performed at a temperature in the range from -20°C to 50°C and wherein the weight-average molecular weight M_{w} and the polydispersity index D are determinable by gel permeation chromatography.

2. Process according to Claim 1, wherein the hydrogenated nitrile rubber (A) employed is a hydrogenated co- or terpolymer containing repeating units of at least one conjugated diene, at least one α,β-unsaturated nitrile and optionally one or more copolymerizable monomers.

3. Process according to Claim 1 or 2, wherein the hydrogenated nitrile rubbers (A) have a weight-average molecular weight M_{w} in the range from 200 000 to 1 000 000, preferably in the range from 200 000 to 400 000, especially preferably in the range from 200 000 to 300 000, and a polydispersity D = M_{w}/Mₙ in the range from 1.9 to 6, preferably in the range from 2.2 to 5 and in particular in the range from 2.5 to 4.

4. Process according to one or more of Claims 1 to 3, wherein ultrasound having a frequency of at least 18 kHz, preferably in the range from 18 to 30 kHz and in particular in the range from 19 and 25 kHz is employed.

5. Process according to one or more of Claims 1 to 4, wherein the ultrasound energy input is effected by immersion of a sonotrode in the solution of the hydrogenated nitrile rubber (A) in a solvent.

6. Process according to one or more of Claims 1 to 5, wherein dichloromethane, benzene, toluene, cyclohexane or monochlorobenzene is used as the solvent for the hydrogenated nitrile rubber (A).

7. Process according to one or more of Claims 1 to 6, wherein the process is performed discontinuously or continuously.

## Revendications

1. Procédé pour la préparation d'un caoutchouc de nitrile hydrogéné (B), **caractérisé en ce qu'**on soumet une solution d'un caoutchouc de nitrile hydrogéné (A) dans un solvant à l'action d'ultrasons, le caoutchouc de nitrile hydrogéné (B) obtenu possédant une moyenne en poids du poids moléculaire (M_{w}) plus basse que le caoutchouc de nitrile hydrogéné (A) et présentant un indice de polydispersité D = M_{w}/Mₙ qui est inférieur ou égal à 2, le procédé étant mis en œuvre à une température dans la plage de -20 à 50 °C et la moyenne en poids du poids moléculaire M_{w} et l'indice de polydispersité D pouvant être déterminés au moyen d'une chromatographie à perméation de gel.

2. Procédé selon la revendication 1, dans lequel on utilise, en tant que caoutchouc de nitrile hydrogéné (A), un copolymère hydrogéné ou un terpolymère hydrogéné qui contient des motifs répétitifs d'au moins un diène conjugué, d'au moins un nitrile α,β-insaturé et éventuellement d'un ou plusieurs monomères copolymérisables.

3. Procédé selon la revendication 1 ou 2, les caoutchoucs de nitrile hydrogénés (A) possédant une moyenne en poids du poids moléculaire M_{w} dans la plage de 200 000 à 1 000 000, préférablement dans la plage de 200 000 à 400 000, en particulier préférablement dans la plage de 200 000 à 300 000 ainsi qu'une polydispersité D = M_{w}/Mₙ dans la plage de 1,9 à 6, préférablement dans la plage de 2,2 à 5 et en particulier dans la plage de 2,5 à 4.

4. Procédé selon l'une ou plusieurs des revendications 1 à 3, des ultrasons d'une fréquence d'au moins 18 kHz, préférablement dans la plage de 18 à 30 kHz et en particulier dans la plage de 19 à 25 kHz, sont utilisés.

5. Procédé selon l'une ou plusieurs des revendications 1 à 4, l'apport en énergie par les ultrasons étant réalisé par immersion d'une sonotrode dans la solution du caoutchouc de nitrile hydrogéné (A) dans un solvant.

6. Procédé selon l'une ou plusieurs des revendications 1 à 5, du dichlorométhane, du benzène, du toluène, du cyclohexane ou du monochlorobenzène étant utilisé en tant que solvant pour le caoutchouc de nitrile hydrogéné (A).

7. Procédé selon l'une ou plusieurs des revendications 1 à 6, la mise en œuvre étant réalisée de manière discontinue ou de manière continue.
